# EUROPEAN PATENT APPLICATION

(11) **EP 4 462 588 A1**
(43) Date of publication of application: **13.11.2024**
(21) Application number: 23758883.5
(22) Date of filing: 03.01.2023
(51) Int. Cl.: H01M 50/627, H01M 50/147

(54) **BATTERY CELL TOP COVER, BATTERY CELL, BATTERY, ELECTRIC DEVICE, AND LIQUID INJECTION NOZZLE**

(30) Priority: 23.02.2022 CN 202220376675 U
(71) Applicant: Contemporary Amperex Technology Co., Limited, Ningde, Fujian 352100 (CN)
(72) Inventor: GE, Shaobing, Ningde, Fujian 352100 (CN); HUANG, Caixia, Ningde, Fujian 352100 (CN); TANG, Minghao, Ningde, Fujian 352100 (CN)
(74) Representative: Thoma, Michael
(86) International application number: PCT/CN2023/070204
(87) International publication number: WO 2023/160257

(57) **Abstract**

This application discloses a battery cell top cover (1), a battery cell (20), a battery (100), an electric device, and an electrolyte injection nozzle (3). The battery cell top cover (1) includes a top cover body (11). The top cover body (11) is provided with an electrolyte injection hole (2). The electrolyte injection hole (2) includes a first hole section (21), a second hole section (22), and a third hole section (23) that are sequentially arranged and communicate with each other in a thickness direction of the top cover body (11). A first pressing surface (24) is formed between an end of the second hole section (22) facing away from the first hole section (21) and the third hole section (23). The first pressing surface (24) can abut against a second pressing surface (31) of the electrolyte injection nozzle (3) to implement surface sealing.

## Description

This application claims priority to Chinese Patent Application No. 202220376675.6, filed with the China National Intellectual Property Administration on February 23, 2022 and entitled "BATTERY CELL TOP COVER, BATTERY CELL, BATTERY, ELECTRIC DEVICE, AND ELECTROLYTE INJECTION NOZZLE", which is incorporated herein by reference in its entirety.

### TECHNICAL FIELD

This application relates to the field of battery technologies, and specifically, to a battery cell top cover, a battery cell, a battery, an electric device, and an electrolyte injection nozzle.

### BACKGROUND

With the development and progress of society, lithium batteries have rapidly entered people's vision as new energy and have been widely used in various fields.

The preparation process of a lithium battery includes an electrolyte injection step. To be specific, an electrolyte injection apparatus is used to inject an electrolyte into the inside of a battery cell via an electrolyte injection hole on a battery cell top cover. However, after the electrolyte injection, there is often residual electrolyte at the electrolyte injection hole, which affects the quality of the battery cell.

### TECHNICAL PROBLEMS

Embodiments of this application are intended to provide a battery cell top cover, a battery cell, a battery, an electric device, and an electrolyte injection nozzle, so as to effectively solve the problem in the prior art that there is often residual electrolyte at an electrolyte injection hole after the electrolyte injection, which affects the quality of the battery cell.

### TECHNICAL SOLUTIONS

The technical solutions used in the embodiments of this application are as follows.

According to a first aspect, this application provides a battery cell top cover including a top cover body, where the top cover body is provided with an electrolyte injection hole; the electrolyte injection hole includes a first hole section, a second hole section, and a third hole section that are sequentially arranged and communicate with each other in a thickness direction of the top cover body, the first hole section being closer to the inside of a battery cell relative to the second hole section; and a stepped surface is formed between an end of the second hole section facing away from the first hole section and the third hole section, the stepped surface being a first pressing surface; where the first pressing surface is configured to abut against a second pressing surface, and the electrolyte injection hole is configured to communicate with an electrolyte injection channel, so as to inject an electrolyte into the battery cell by inserting an electrolyte injection nozzle with the second pressing surface and the electrolyte injection channel into the electrolyte injection hole.

In the technical solution of these embodiments of this application, with the electrolyte injection hole that includes the first hole section, the second hole section, and the third hole section penetrating through the top cover body in the thickness direction, the electrolyte can be injected into the battery cell by inserting the electrolyte injection nozzle into the electrolyte injection hole, thereby directly guiding the fluid and effectively preventing electrolyte leakage when the electrolyte flows into the battery cell during the electrolyte injection. In addition, in the technical solution of these embodiments of this application, with the first pressing surface provided between the second hole section and the third hole section, when the battery cell top cover fits with the electrolyte injection nozzle, the first pressing surface can tightly abut against the second pressing surface of the electrolyte injection nozzle in an electrolyte injection direction, namely, a direction perpendicular to the battery cell top cover. This implements surface sealing with a large contact area through surface-to-surface abutting, avoids sealing failure during the electrolyte injection, achieves an effective and reliable surface sealing effect, and prevents electrolyte leakage during the electrolyte injection, thereby solving the problem of electrolyte contamination. Moreover, surface-to-surface contact sealing effectively reduces frictional force, thereby effectively prolonging service life of the battery cell top cover and reducing production and maintenance costs.

In some embodiments, an inner wall of the second hole section is a tapered inner wall, where the tapered inner wall is configured to cover an outer wall of a tapered portion, so as to inject the electrolyte into the battery cell via the electrolyte injection nozzle with the tapered portion.

With the inner wall of the second hole section set as a tapered inner wall, when the electrolyte injection nozzle is inserted into the electrolyte injection hole, the inner wall of the second hole section can also fit with the tapered portion of the electrolyte injection nozzle to implement fitting sealing of inclined surfaces, and the second hole section can also guide the insertion of the electrolyte injection nozzle and improve insertion accuracy.

In some embodiments, the first pressing surface is a horizontal surface; or the first pressing surface is provided with a recessed region.

The first pressing surface is set as a horizontal surface, leading to a low positioning accuracy requirement when the second pressing surface of the electrolyte injection nozzle is pressed against the first pressing surface, thereby simply and efficiently achieving a surface-to-surface sealing effect. This ensures that an outer side of the third hole section is not contaminated by the electrolyte, avoiding explosion points during subsequent welding of the electrolyte injection hole with a sealing nail. In addition, the horizontal surface can effectively increase the contact area with the second pressing surface, implementing surface-to-surface sealing by using a pressing force in a direction perpendicular to the surface. With the first pressing surface provided with a recessed region, the second pressing surface of the electrolyte injection nozzle is provided with a corresponding protruding region fitting with the recessed region of the first pressing surface, which can implement positioning and sealing pressing between the first pressing surface and the second pressing surface.

In some embodiments, an area of a projection of the first pressing surface in a first direction is a first area; where the first area is greater than a contact area of the first pressing surface and the second pressing surface when the first pressing surface abuts against the second pressing surface; and the first direction is the thickness direction of the top cover body.

With the area of the projection of the first pressing surface in the first direction set to be greater than the contact area when the first pressing surface is in contact with the second pressing surface, the first pressing surface extends an overflow path of the electrolyte. Therefore, even if the electrolyte leaks, the electrolyte does not flow to the third hole section and the outer side of the third hole section, avoiding affecting subsequent welding with the sealing nail.

In some embodiments, a diameter of the first hole section is a first diameter; where the first diameter is greater than a diameter of the electrolyte injection channel.

The first hole section is a portion closest to the inside of the battery cell. With the diameter of the first hole section set to be greater than the diameter of the electrolyte injection channel on the electrolyte injection nozzle, it can be ensured that the first hole section can completely accommodate the electrolyte injection channel when the electrolyte injection nozzle is inserted into the electrolyte injection hole, ensuring that the electrolyte injected via the electrolyte injection channel of the electrolyte injection nozzle can all enter the first hole section of the electrolyte injection hole, thereby not only sufficiently guiding the electrolyte but also preventing electrolyte overflow to some extent.

In some embodiments, an inner wall of the third hole section is a tapered inner wall; or the inner wall of the third hole section is a cylindrical inner wall.

The inner wall of the third hole section may be set as a tapered inner wall or a cylindrical inner wall, provided that fitting with the sealing nail can be implemented.

According to a second aspect, this application provides a battery cell including the foregoing battery cell top cover.

According to a third aspect, this application provides a battery including the foregoing battery cell.

According to a fourth aspect, this application provides an electric device including the foregoing battery.

In some embodiments, the electric device is one of a mobile phone, a tablet, a notebook computer, an electric toy, an electric tool, an electric bicycle, a new energy vehicle, a ship, or a spacecraft.

The battery of the electric device using the battery provided in the embodiments of this application has better performance, alleviating the problem that residual electrolyte affects the quality of the battery.

According to a fifth aspect, this application provides an electrolyte injection nozzle including a substrate, where an end of the substrate is provided with a protruding portion, and the substrate is provided in an axial direction of the substrate with an electrolyte injection channel penetrating through the substrate and the protruding portion; and an end surface of the substrate on which the protruding portion is located forms a second pressing surface; where the second pressing surface is configured to abut against a first pressing surface, and the electrolyte injection channel is configured to communicate with an electrolyte injection hole, so as to inject an electrolyte into a battery cell by inserting the electrolyte injection nozzle into a battery cell top cover with the electrolyte injection hole and the first pressing surface.

In the technical solution of these embodiments of this application, with the protruding portion provided at an end of the electrolyte injection nozzle, the protruding portion can be preferentially inserted when the electrolyte injection nozzle is inserted into the electrolyte injection hole, thereby directly guiding the fluid and effectively preventing electrolyte leakage when the electrolyte flows into the battery cell during the electrolyte injection. In addition, in the technical solution of these embodiments of this application, with the second pressing surface formed on the end portion, excluding the protruding portion, of the substrate on which the protruding portion is located, when the electrolyte injection nozzle fits with the battery cell top cover, the second pressing surface can tightly abut against the first pressing surface of the battery cell top cover when the electrolyte injection nozzle is pressed down by an external force. This implements surface sealing with a large contact area through surface-to-surface abutting, avoids sealing failure during the electrolyte injection, achieves an effective and reliable surface sealing effect, and prevents electrolyte leakage during the electrolyte injection, thereby solving the problem of electrolyte contamination. Moreover, surface-to-surface contact sealing effectively reduces frictional force, thereby effectively prolonging service life of the electrolyte injection nozzle and reducing production and maintenance costs.

In some embodiments, the protruding portion is a tapered portion, where an outer wall of the tapered portion is configured to be covered by a tapered inner wall of a second hole section, so that when the electrolyte injection nozzle is inserted into the electrolyte injection hole, the tapered portion is inserted into the electrolyte injection hole with the second hole section;
or the protruding portion is cylindrical.

With the protruding portion set as a tapered portion, when the protruding portion is inserted into the electrolyte injection hole of the battery cell top cover, the protruding portion can be accurately inserted into the second hole section of the electrolyte injection hole and covered by the second hole section, guiding the insertion of the electrolyte injection nozzle and improving insertion accuracy. With the protruding portion set to be cylindrical, the second hole section of the electrolyte injection hole is set to be cylindrical correspondingly, implementing circumferential covering and sealing of the electrolyte injection channel and guiding the insertion of the electrolyte injection nozzle.

In some embodiments, the second pressing surface is a horizontal surface; or the second pressing surface is an arc surface protruding toward the protruding portion.

In these embodiments, to fit with the first pressing surface to form surface-to-surface sealing, the second pressing surface can be set as a horizontal surface or an arc surface facing the protruding portion, namely, facing the electrolyte injection hole, so as to enhance the diversity of contact surface design, thereby improving feasibility, versatility, and applicability. When the second pressing surface is a horizontal surface, surface-to-surface pressing sealing with the first pressing surface can be easily implemented, forming tight pressing in a direction perpendicular to the first pressing surface, and effectively solving the problem of sealing failure during the electrolyte injection, thereby preventing electrolyte leakage. When the second pressing surface is a protruding arc surface, the arc surface can also be compressed to form a plane to fit with the first pressing surface when the electrolyte injection nozzle is pressed toward the electrolyte injection hole by an external force, also preventing sealing failure.

In some embodiments, the second pressing surface includes a horizontal surface, and the horizontal surface is provided with continuous protrusions protruding toward the protruding portion.

In these embodiments, the second pressing surface not only can be set as a simple horizontal surface or arc surface, but also can be provided with protrusions facing the protruding portion, namely, facing the electrolyte injection hole, on the horizontal surface. The protrusions are continuously arranged around the axial direction of the substrate, so that when the electrolyte injection nozzle is pressed toward the electrolyte injection hole by an external force, the protrusions can be sealed with the first pressing surface under a great pressure to prevent electrolyte leakage. In addition, when pressed, the protrusions are compressed to allow the horizontal surface on which the protrusions are located to fit with the first pressing surface as much as possible, thereby implementing surface-to-surface sealing.

In some embodiments, the horizontal surface is provided with concentric ring protrusions.

With the second pressing surface provided with the concentric ring protrusions formed by a plurality of spaced-apart concentric circular rings, multi-sealing can be implemented for the electrolyte. In such arrangement, even if a small amount of electrolyte leaks, the space between adjacent protrusions can accommodate the leaked electrolyte and prevent further overflow of the electrolyte, ensuring that the electrolyte does not overflow to the outer step of the third hole section, thereby ensuring the final sealing effect of the sealing nail on the electrolyte injection hole.

In some embodiments, an area of a projection of the second pressing surface in a second direction is a second area; where the second area is smaller than an area of the first pressing surface when the second pressing surface abuts against the first pressing surface; and the second direction is the axial direction of the substrate.

With the area of the projection of the second pressing surface in the second direction set to be smaller than the area of the first pressing surface when the first pressing surface is in contact with the second pressing surface, the leaked electrolyte is prevented from flowing to the third hole section of the electrolyte injection hole to contaminate the periphery of the electrolyte injection hole, which otherwise affects subsequent welding with the sealing nail.

In some embodiments, the substrate and the protruding portion are an integrally formed elastic structure.

Through integral forming, the sealing degree between the substrate and the protruding portion is reliable, thereby avoiding unnecessary leakage points.

The foregoing description is merely an overview of the technical solutions of this application. For a better understanding of the technical means in this application such that they can be implemented according to the content of the specification, and to make the above and other objectives, features, and advantages of this application more obvious and easier to understand, the following describes specific embodiments of this application.

### BRIEF DESCRIPTION OF DRAWINGS

To describe the technical solutions in the embodiments of this application more clearly, the following briefly describes the accompanying drawings required for describing the embodiments or illustrative techniques. Apparently, the accompanying drawings in the following description show only some embodiments of this application, and persons of ordinary skill in the art may still derive other drawings from these accompanying drawings without creative efforts.
FIG. 1 is a schematic structural diagram of an electric device according to some embodiments of this application;
FIG. 2 is a schematic structural exploded view of a battery according to some embodiments of this application;
FIG. 3 is a schematic structural exploded view of a battery cell according to some embodiments of this application;
FIG. 4 is a schematic structural diagram of a battery cell top cover according to some embodiments of this application;
FIG. 5 is a schematic cross-sectional view of an electrolyte injection hole on a battery cell top cover fitting with an electrolyte injection nozzle according to some embodiments of this application;
FIG. 6 is a schematic cross-sectional view of an electrolyte injection hole on a battery cell top cover fitting with another electrolyte injection nozzle according to some embodiments of this application;
FIG. 7 is a schematic cross-sectional view of an electrolyte injection hole on a battery cell top cover fitting with still another electrolyte injection nozzle according to some embodiments of this application; and
FIG. 8 is a schematic diagram of structural fitting of an electrolyte injection hole on a battery cell top cover and an electrolyte injection nozzle according to some embodiments of this application.

Reference signs in the specific embodiments are described as follows:
battery cell top cover 1, top cover body 11, electrolyte injection hole 2, first hole section 21, second hole section 22, third hole section 23, first pressing surface 24, electrolyte injection nozzle 3, second pressing surface 31, electrolyte injection channel 32, substrate 33, protruding portion 34, protrusion 35, vehicle 1000, battery 100, box 10, first portion 101, second portion 102, battery cell 20, housing 202, electrode assembly 203, electrode terminal 21a, controller 200, motor 300, first direction a, and second direction b.

### DESCRIPTION OF EMBODIMENTS OF THE PRESENT INVENTION

To make the objectives, technical solutions, and advantages of this application more comprehensible, the following further describes this application in detail with reference to the accompanying drawings and embodiments. It should be understood that the specific embodiments described herein are merely used to explain the present invention but are not intended to limit this application.

Unless otherwise defined, all technical and scientific terms used herein shall have the same meanings as commonly understood by persons skilled in the art to which this application relates. The terms used herein are intended to merely describe the specific embodiments rather than to limit this application. The terms "include", "comprise", and "have" and any other variations thereof in the specification, claims, and brief description of drawings of this application are intended to cover non-exclusive inclusions.

In the description of the embodiments of this application, the technical terms "first", "second", and the like are merely intended to distinguish between different objects, and shall not be understood as any indication or implication of relative importance or any implicit indication of the number, specific sequence, or primary-secondary relationship of the technical features indicated.

In this specification, reference to "embodiment" means that specific features, structures, or characteristics described with reference to the embodiment may be incorporated in at least one embodiment of this application. The word "embodiment" appearing in various places in the specification does not necessarily refer to the same embodiment or an independent or alternative embodiment that is exclusive of other embodiments. Persons skilled in the art explicitly and implicitly understand that the embodiments described herein may be combined with other embodiments.

In the description of the embodiments of this application, the term "and/or" is only an associative relationship for describing associated objects, indicating that three relationships may be present. For example, A and/or B may indicate the following three cases: presence of A, presence of both A and B, and presence of B. In addition, the character "/" in this specification generally indicates an "or" relationship between the contextually associated objects.

In the description of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", "radial", "circumferential", and the like are based on the orientations or positional relationships as shown in the accompanying drawings. These terms are merely for ease and brevity of the description of the embodiments of this application rather than indicating or implying that the apparatuses or elements mentioned must have specific orientations or must be constructed or manipulated according to specific orientations, and therefore shall not be construed as any limitations on the embodiments of this application.

In the description of the embodiments of this application, unless otherwise specified and defined explicitly, the technical terms "mount", "connect", "join", "fix", and "dispose" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in the embodiments of this application as appropriate to specific situations.

The following describes in detail the technical solutions provided in this application with reference to the specific accompanying drawings and embodiments.

Currently, from the perspective of market development, application of traction batteries is being more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With the continuous expansion of application fields of traction batteries, market demands for traction batteries are also increasing.

The inventors have noted that for injection of an electrolyte into a battery cell, the electrolyte is generally injected into the inside of the battery cell by using an electrolyte injection apparatus fitting with an electrolyte injection hole on the battery cell, and the electrolyte injection hole is sealed with a sealing nail after the electrolyte injection. After the electrolyte injection is completed, there is often residual electrolyte at the electrolyte injection port, affecting the quality of the battery cell. Through long-term research, it has been found that the residual electrolyte is caused by poor airtightness between an electrolyte injection nozzle of the electrolyte injection apparatus and the electrolyte injection hole, which cannot meet the sealing requirements during the electrolyte injection.

To solve the problem in the prior art that effective sealing between the electrolyte injection nozzle and the electrolyte injection hole cannot be ensured, which easily causes electrolyte leakage during the electrolyte injection and results in electrolyte contamination, affecting battery performance, the applicant has found through research that a first pressing surface 24 can be provided in an electrolyte injection hole 2 of a battery cell top cover 1 and a second pressing surface 31 can be provided on an end surface of the electrolyte injection nozzle 3 fitting with the electrolyte injection hole 2, so that when the electrolyte injection nozzle 3 fits with the electrolyte injection hole 2 to inject the electrolyte into the battery cell, the first pressing surface 24 can tightly abut against the second pressing surface 31, which increases the sealing area through surface-to-surface abutting and fitting, avoiding electrolyte leakage and even overflow to the outside of the electrolyte injection hole to contaminate the electrolyte injection hole, which otherwise affects final sealing of the sealing nail.

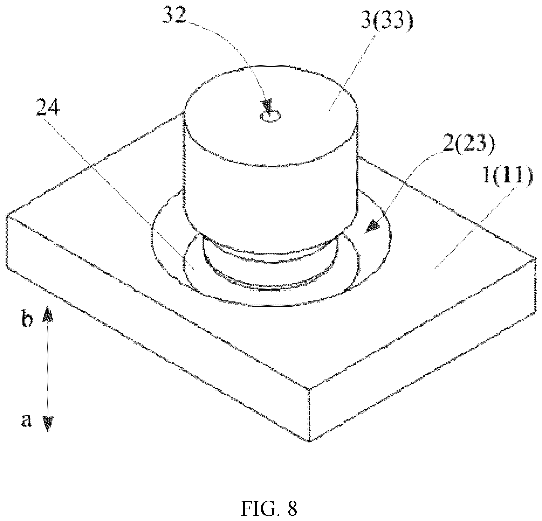

Based on the foregoing considerations, to solve the problem in the prior art that effective sealing between the electrolyte injection nozzle and the electrolyte injection hole cannot be ensured, which easily causes electrolyte leakage during the electrolyte injection and results in electrolyte contamination, affecting battery performance, the inventors, through in-depth research, have designed a battery cell top cover 1 and an electrolyte injection nozzle 3 fitting with the battery cell top cover 1. Referring to FIG. 8, the battery cell top cover 2 includes a top cover body 11, where the top cover body 11 is provided with an electrolyte injection hole 2; the electrolyte injection hole 2 includes a first hole section 21, a second hole section 22, and a third hole section 23 that are sequentially arranged and communicate with each other in a thickness direction of the top cover body 11, the first hole section 21 being closer to the inside of a battery cell relative to the second hole section 22; and a stepped surface is formed between an end of the second hole section 22 facing away from the first hole section 21 and the third hole section 23, the stepped surface being a first pressing surface 24; where the first pressing surface 24 is configured to abut against a second pressing surface 31, and the electrolyte injection hole 2 is configured to communicate with an electrolyte injection channel 32, so as to inject an electrolyte into the battery cell 20 by inserting an electrolyte injection nozzle 3 with the second pressing surface 31 and the electrolyte injection channel 32 into the electrolyte injection hole 2. The electrolyte injection nozzle 3 includes a substrate 33, where an end of the substrate 33 is provided with a protruding portion 34, and the substrate 33 is provided in an axial direction of the substrate 33 with the electrolyte injection channel 32 penetrating through the substrate 33 and the protruding portion 34; and an end surface of the substrate 33 on which the protruding portion 34 is located forms the second pressing surface 31; where the second pressing surface 31 is configured to abut against the first pressing surface 24, and the electrolyte injection channel 32 is configured to communicate with the electrolyte injection hole 2, so as to inject the electrolyte into the battery cell 20 by inserting the electrolyte injection nozzle 3 into the battery cell top cover 1 with the electrolyte injection hole 2 and the first pressing surface 24.

In such battery cell top cover 1 and electrolyte injection nozzle 3, through fitting of the protruding portion 34 on the electrolyte injection nozzle 3 and the electrolyte injection hole 2 on the battery cell top cover 1, the protruding portion 34 can be preferentially inserted when the electrolyte injection nozzle 3 is inserted into the electrolyte injection hole 2, thereby directly guiding the fluid and effectively preventing electrolyte leakage when the electrolyte flows into the battery cell 20 during the electrolyte injection. In addition, with the second pressing surface 31 formed on the end portion of the substrate 33 on which the protruding portion 34 is located on the electrolyte injection nozzle 3 fitting with the first pressing surface 21 in the electrolyte injection hole 2, when the electrolyte injection nozzle 3 is pressed down by an external force, the second pressing surface 31 can tightly abut against the first pressing surface 21 of the battery cell top cover 1. This implements surface sealing with a large contact area through surface-to-surface abutting, avoids sealing failure during the electrolyte injection, achieves an effective and reliable surface sealing effect, and prevents electrolyte leakage during the electrolyte injection, thereby solving the problem of electrolyte contamination. Moreover, surface-to-surface contact sealing effectively reduces frictional force, thereby effectively prolonging service life of the electrolyte injection nozzle and reducing production and maintenance costs.

The battery cell top cover 1 disclosed in the embodiments of this application may be used without limitation in lithium batteries. The battery cell top cover 1 disclosed in this application can be used to form electric devices composed of battery cells, batteries, etc., and power systems composed of such electric devices. This helps to solve the problem in the prior art of not being able to ensure effective sealing between the electrolyte injection nozzle and the electrolyte injection hole, which easily causes electrolyte leakage during the injection process, resulting in electrolyte contamination and affecting battery performance.

An embodiment of this application provides an electric device that uses a battery as a power source. The electric device may be used without limitation in fields such as construction, military, travel, national defense, and power supply, for example, a mobile phone, a tablet, a notebook computer, an electric toy, an electric tool, an electric bicycle, an electric vehicle, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric device of an embodiment of this application being a vehicle 1000 is used as an example for description of the following embodiments.

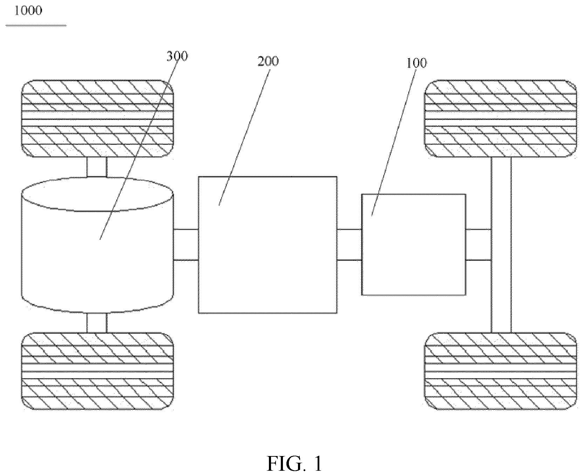

Referring to FIG. 1, FIG. 1 is a schematic structural diagram of a vehicle 1000 according to some embodiments of this application. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. The vehicle 1000 is provided with a battery 100 inside, and the battery 100 may be disposed at the bottom, front, or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

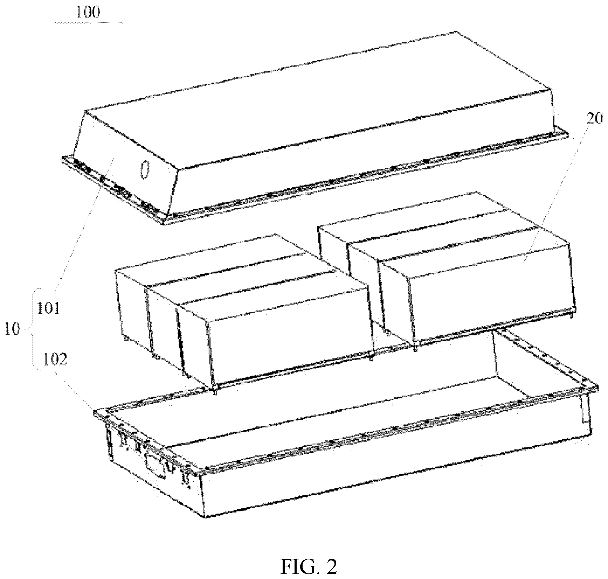

Referring to FIG. 2, FIG. 2 is an exploded view of a battery 100 according to some embodiments of this application. The battery 100 includes a box 10 and a battery cell 20, where the battery cell 20 is accommodated in the box 10. The box 10 is configured to provide an accommodating space for the battery cell 20. The box 10 may be a variety of structures. In some embodiments, the box 10 may include a first portion 101 and a second portion 102. The first portion 101 and the second portion 102 fit together to jointly define an accommodating space for accommodating the battery cell 20. The second portion 102 may be a hollow structure with an opening at one end, the first portion 101 may be a plate-shaped structure, and the first portion 101 covers the opening side of the second portion 102 so that the first portion 101 and the second portion 102 jointly define the accommodating space. Alternatively, both the first portion 101 and the second portion 102 may be hollow structures with an opening at one side, and the opening side of the first portion 101 is engaged with the opening side of the second portion 102. Certainly, the box 10 formed by the first portion 101 and the second portion 102 may be of various shapes, for example, cylinder or cuboid.

In the battery 100, the battery cell 20 may be provided in plurality, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10; or certainly, the battery 100 may be formed by a plurality of battery cells 20 being connected in series, parallel, or series-parallel first to form a battery module and then a plurality of battery modules being connected in series, parallel, or series-parallel to form an entirety which is accommodated in the box 10. The battery 100 may also include other structures. For example, the battery 100 may further include a busbar component for achieving electrical connection between multiple battery cells 20.

Each battery cell 20 may be a secondary battery or a primary battery, and may be a lithium-sulfur battery, a sodium-ion battery, or a magnesium-ion battery, without being limited thereto. The battery cell 20 may be cylindrical, flat, cuboid, or of other shapes.

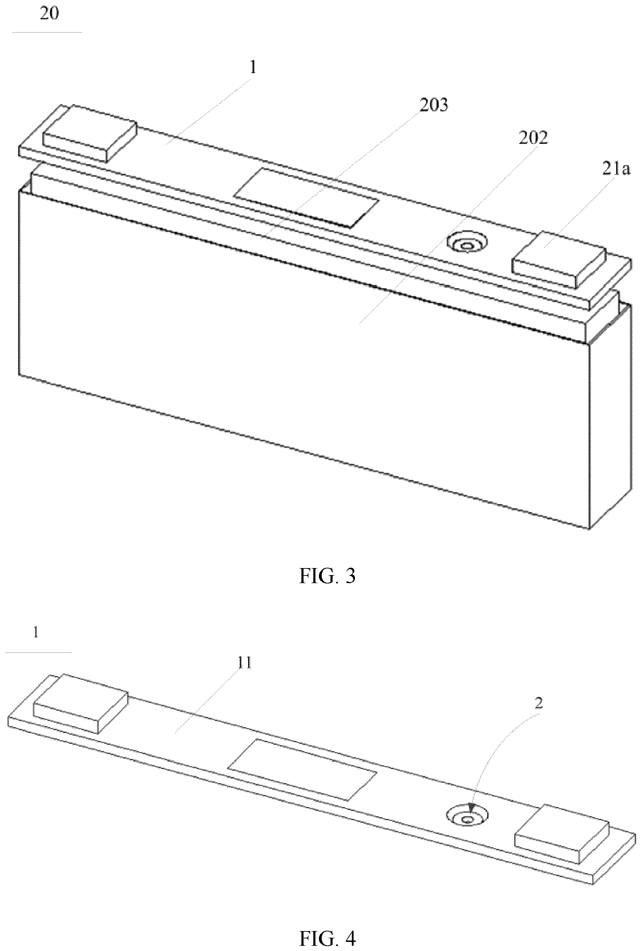

Referring to FIG. 3, FIG. 3 is a schematic structural exploded view of a battery 20 according to some embodiments of this application. The battery cell 20 is a smallest unit constituting a battery. As shown in FIG. 3, the battery cell 20 includes a battery cell top cover 1, a housing 202, an electrode assembly 203, and other functional components.

The battery cell top cover 1 is a component that covers an opening of the housing 202 to isolate an internal environment of the battery cell 20 from an external environment. Without limitation, shape of the battery cell top cover 1 may be adapted to shape of the housing 202 to fit the housing 202. Optionally, the battery cell top cover 1 may be made of a material with certain hardness and strength (for example, aluminum alloy), so that the battery cell top cover 1 is less likely to deform when subjected to extrusion and collision, allowing the battery cell 20 to have higher structural strength and enhanced safety performance. Functional components such as an electrode terminal 21a may be provided on the battery cell top cover 1. The electrode terminal 21a may be configured to be electrically connected to the electrode assembly 203 for outputting or inputting electrical energy of the battery cell 20. In some embodiments, the battery cell top cover 1 may be further provided with a pressure relief mechanism for releasing internal pressure when the internal pressure or temperature of the battery cell 20 reaches a threshold. The battery cell top cover 1 may alternatively be made of various materials, such as copper, iron, aluminum, stainless steel, aluminum alloy, and plastic, which are not particularly limited in the embodiments of this application. In some embodiments, an insulator may also be provided at an inner side of the battery cell top cover 1. The insulator may be configured to insulate an electrical connection component in the housing 202 from the battery cell top cover 1 to reduce the risk of short circuit. For example, the insulator may be made of plastic, rubber, or the like.

The housing 202 is an assembly configured to form the internal environment of the battery cell 20 by fitting with the battery cell top cover 1, where the formed internal environment may be used to accommodate the electrode assembly 203, an electrolyte, and other components. The housing 202 and the battery cell top cover 1 may be separate components, an opening may be provided on the housing 202, and the battery cell top cover 1 covers the opening to form the internal environment of the battery cell 20. Without limitation, the battery cell top cover 1 and the housing 202 may alternatively be integrated. Specifically, the battery cell top cover 1 and the housing 202 may form a shared connection surface before other components are disposed inside the housing, and then the housing 202 is covered with the battery cell top cover 1 when the inside of the housing 202 needs to be enclosed. The housing 202 may be of various shapes and sizes, such as a rectangular shape, a cylindrical shape, and a hexagonal prism shape. Specifically, the shape of the housing 202 may be determined according to a specific shape and size of the electrode assembly 203. The housing 202 may be made of various materials, such as copper, iron, aluminum, stainless steel, aluminum alloy, and plastic, which are not particularly limited in the embodiments of this application.

The electrode assembly 203 is a component in which electrochemical reactions take place in the battery cell 20. The housing 202 may include one or more electrode assemblies 203. The electrode assembly 203 is mainly formed by winding or stacking a positive electrode plate and a negative electrode plate, and a separator is generally provided between the positive electrode plate and the negative electrode plate. Parts of the positive electrode plate and the negative electrode plate that have active substances constitute a body portion of the cell assembly, while generally, parts of the positive electrode plate and the negative electrode plate that have no active substances each constitute a tab (not shown in the figure). A positive tab and a negative tab may both be located at one end of the body portion or be located at two ends of the body portion respectively. During charging and discharging of the battery, a positive electrode active substance and a negative electrode active substance react with the electrolyte, and the tabs are connected to the electrode terminals 21a to form a current loop.

According to some embodiments of this application, referring to FIG. 4, FIG. 5, FIG. 6, and FIG. 7, this application provides a battery cell top cover 1. The battery cell top cover 1 includes a top cover body 11, where the top cover body 11 is provided with an electrolyte injection hole 2; the electrolyte injection hole 2 includes a first hole section 21, a second hole section 22, and a third hole section 23 that are sequentially arranged and communicate with each other in a thickness direction of the top cover body 11, the first hole section 21 being closer to the inside of a battery cell relative to the second hole section 22; and a stepped surface is formed between an end of the second hole section 22 facing away from the first hole section 21 and the third hole section 23, the stepped surface being a first pressing surface 24; where the first pressing surface 24 is configured to abut against a second pressing surface 31, and the electrolyte injection hole 2 is configured to communicate with an electrolyte injection channel 32, so as to inject an electrolyte into the battery cell 20 by inserting an electrolyte injection nozzle 3 with the second pressing surface 31 and the electrolyte injection channel 32 into the electrolyte injection hole 2.

The top cover body 11 is a main component that covers an opening of the housing 202 to isolate an internal environment of the battery cell 20 from an external environment. Shape of the top cover body 11 may be adapted to shape of the housing 202 to fit the housing 202. The top cover body 11 may be made of a material with certain hardness and strength (for example, aluminum alloy), so that the battery cell top cover 11 is less likely to deform when subjected to extrusion and collision, allowing the battery cell 20 to have higher structural strength and enhanced safety performance. Functional components such as an electrode terminal and a pressure relief mechanism may be further provided on the top cover body 11.

The electrolyte injection hole 2 is a through hole penetrating through the top cover body 11 in the thickness direction, the electrolyte injection nozzle 3 is inserted into the electrolyte injection hole 2 when the electrolyte is injected into the battery cell 20 via the electrolyte injection nozzle 3, and the electrolyte injection hole 2 includes the first hole section 21, the second hole section 22, and the third hole section 23 that communicate with each other sequentially. The first hole section 21 is closer to the inside of the battery cell 20 to transition the electrolyte and guide the electrolyte into the inside of the battery cell 20; the second hole section 22 is used to fit with a protruding portion 34 of the electrolyte injection nozzle 3 for close sealing; and the third hole section 23 is used to fit with a sealing nail for final sealing after the electrolyte injection. The first hole section 21 directly communicates with the second hole section 22, and the second hole section 22 does not directly communicate with the third hole section 23 but is connected to the third hole section 23 through the stepped surface formed at an end of the second hole section 22 facing the third hole section 23, so at least the third hole section 23 has a different hole diameter than the other two hole sections. The stepped surface is the first pressing surface 24, which is used to fit with the electrolyte injection nozzle 3 for sealing pressing when the electrolyte is injected into the battery cell 20. In these embodiments, the first pressing surface 24 may be a horizontal surface or a non-horizontal surface, for example, the horizontal surface is provided with a recessed region, provided that it can fit with the second pressing surface 31 of the electrolyte injection nozzle 3 to implement surface-to-surface pressing sealing on the first pressing surface 24. For example, when the first pressing surface 24 is a horizontal surface, the second pressing surface 31 may be a horizontal surface or have a protrusion facing the first pressing surface 24; and when the first pressing surface 24 is provided with a recessed region, the second pressing surface 31 is provided with a corresponding protruding region, which ensures that the protruding region and the recessed region can precisely align and press during pressing. Fitting of the recessed region and the protruding region can implement positioning and sealing pressing between the first pressing surface 24 and the second pressing surface 31.

With the electrolyte injection hole 2 that includes the first hole section 21, the second hole section 22, and the third hole section 23 penetrating through the top cover body 11 in the thickness direction, the electrolyte can be injected into the battery cell by inserting the electrolyte injection nozzle 3 into the electrolyte injection hole 2. In this case, the electrolyte enters the battery cell 20 via the first hole section 21, thereby directly guiding the fluid and effectively preventing electrolyte leakage when the electrolyte flows into the battery cell during the electrolyte injection. In addition, in the technical solution of these embodiments of this application, with the first pressing surface 24 provided between the second hole section 22 and the third hole section 23, when the battery cell top cover 1 fits with the electrolyte injection nozzle 3, the first pressing surface 24 can tightly abut against the second pressing surface 31 of the electrolyte injection nozzle 3 in an electrolyte injection direction, namely, a direction perpendicular to the battery cell top cover 1. This implements surface sealing with a large contact area through surface-to-surface abutting, avoids sealing failure during the electrolyte injection, achieves an effective and reliable surface sealing effect, and prevents electrolyte leakage during the electrolyte injection, thereby solving the problem of electrolyte contamination. Moreover, surface-to-surface contact sealing effectively reduces frictional force, thereby effectively prolonging service life of the battery cell top cover and reducing production and maintenance costs.

According to some embodiments of this application, optionally, referring to FIG. 4, FIG. 5, FIG. 6, and FIG. 7, an inner wall of the second hole section 22 is a tapered inner wall, where the tapered inner wall is configured to cover an outer wall of a tapered portion, so as to inject the electrolyte into the battery cell 20 via the electrolyte injection nozzle 3 with the tapered portion.

With the inner wall of the second hole section 22 set as a tapered inner wall, when the electrolyte injection nozzle 3 is inserted into the electrolyte injection hole, the inner wall of the second hole section 22 can also fit with the tapered portion of the electrolyte injection nozzle 3 to implement fitting sealing of inclined surfaces, and the second hole section 22 can also guide the insertion of the electrolyte injection nozzle 3 and improve insertion accuracy.

According to some embodiments of this application, optionally, referring to FIG. 4, FIG. 5, FIG. 6, and FIG. 7, the first pressing surface 24 is a horizontal surface.

In these embodiments, the first pressing surface 24 is set as a horizontal surface, leading to a low positioning accuracy requirement when the second pressing surface 31 of the electrolyte injection nozzle 3 abuts against the first pressing surface 24, thereby simply and efficiently achieving a surface-to-surface sealing effect. This ensures that an outer side, namely, an outer step, of the third hole section 23 is not contaminated by the electrolyte, avoiding affecting subsequent welding of the electrolyte injection hole 2 with the sealing nail. In addition, the horizontal surface can effectively increase the contact area with the second pressing surface 31, implementing surface-to-surface sealing by using a pressing force in a direction perpendicular to the surface.

According to some embodiments of this application, optionally, referring to FIG. 4, FIG. 5, FIG. 6, and FIG. 7, an area of a projection of the first pressing surface 24 in a first direction a is a first area; where the first area is greater than a contact area of the first pressing surface 24 and the second pressing surface 31 when the first pressing surface 24 abuts against the second pressing surface 31; and the first direction a is the thickness direction of the top cover body 11.

With the area of the projection of the first pressing surface 24 in the first direction a set to be greater than the contact area when the first pressing surface 24 is in contact with the second pressing surface 31, the first pressing surface 24 extends a distance between a hole wall of the second hole section 22 and a hole wall of the third hole section 23 in a radial direction of the electrolyte injection hole 2. In other words, referring to FIG. 4 to FIG. 7, a size of the first pressing surface 24 in the left-right direction in the figures is greater than a size of the second pressing surface 31 in the left-right direction in the figures, or a width of the first pressing surface 24 is greater than a width of the second pressing surface 31, thereby extending an overflow path of the electrolyte from the first hole section 21 outward. Therefore, even if the electrolyte leaks, the electrolyte does not flow to the junction of the first pressing surface 24 and the third hole section 23, the third hole section 23, and the outer side, namely, the outer step, of the third hole section 23, avoiding affecting subsequent welding with the sealing nail.

According to some embodiments of this application, optionally, referring to FIG. 4, FIG. 5, FIG. 6, and FIG. 7, a diameter of the first hole section 21 is a first diameter; where the first diameter is greater than a diameter of the electrolyte injection channel 32.

The first hole section 21 is a portion closest to the inside of the battery cell. With the diameter of the first hole section 21 set to be greater than the diameter of the electrolyte injection channel 32 on the electrolyte injection nozzle 3, it can be ensured that a projection of the first hole section 21 in the first direction a can completely accommodate or cover a projection of the electrolyte injection channel 32 in the first direction a when the electrolyte injection nozzle 3 is inserted into the electrolyte injection hole 2, so that the electrolyte has a greater flow rate in the first hole section 21 than in the electrolyte injection channel 32 when the electrolyte flows into the inside of the battery cell 20 via the first hole section 21, ensuring that the electrolyte injected via the electrolyte injection channel 32 of the electrolyte injection nozzle 3 can all enter the first hole section 21 of the electrolyte injection hole 2, thereby not only sufficiently guiding the electrolyte but also preventing electrolyte overflow to some extent.

According to some embodiments of this application, optionally, referring to FIG. 4 to FIG. 7, an inner wall of the third hole section 23 is a tapered inner wall; or the inner wall of the third hole section 23 is a cylindrical inner wall.

With the inner wall of the third hole section 23 set as a tapered inner wall, fitting with a conventional sealing nail is implemented. Certainly, for the third hole section 23, its inner wall shape can be set as long as it can fit with the sealing nail for sealing connection. Further, in these embodiments, the inner wall of the third hole section 23 may alternatively be set as a cylindrical shape, such as a circular cylinder or a square cylinder, which can be set based on actual needs, provided that fitting with the sealing nail can be implemented.

According to some embodiments of this application, referring to FIG. 3, this application provides a battery cell 20. The battery cell 20 includes the foregoing battery cell top cover 1.

According to some embodiments of this application, referring to FIG. 2, this application further provides a battery 100 including the battery cell 20 in any one of the foregoing solutions.

According to some embodiments of this application, referring to FIG. 1, this application further provides an electric device including the battery 100 in any one of the foregoing solutions, where the battery 100 is configured to provide electrical energy for the electric device. The electric device may be any one of the foregoing devices or systems using a battery.

According to some embodiments of this application, referring to FIG. 4 to FIG. 7, this application provides an electrolyte injection nozzle 3. The electrolyte injection nozzle 3 includes a substrate 33, where an end of the substrate 33 is provided with a protruding portion 34, and the substrate 33 is provided in an axial direction of the substrate 33 with an electrolyte injection channel 32 penetrating through the substrate 33 and the protruding portion 34; and an end surface of the substrate 33 on which the protruding portion 34 is located forms a second pressing surface 31; where the second pressing surface 31 is configured to abut against a first pressing surface 24, and the electrolyte injection channel 32 is configured to communicate with an electrolyte injection hole 2, so as to inject an electrolyte into a battery cell 20 by inserting the electrolyte injection nozzle 3 into a battery cell top cover 1 with the electrolyte injection hole 2 and the first pressing surface 24.

The substrate 33 is a main electrolyte injection structure fitting with the electrolyte injection hole 2. The substrate 33 may be rigid or have certain elasticity, provided that the substrate 33 can be inserted into the electrolyte injection hole 2 to fit with the electrolyte injection hole 2. Shape and size of the substrate 33 are not limited herein, provided that the substrate 33 can be connected to and communicate with an electrolyte injection apparatus to introduce the electrolyte into the battery cell 20 from the electrolyte injection apparatus.

The protruding portion 34 is a structure protruding from an end surface of the substrate 33. The protruding portion 34 fits with the second hole section 22 of the electrolyte injection hole 2 for circumferential covering and sealing of the electrolyte injection channel 32 and guiding of the insertion of the electrolyte injection nozzle. Shape and size of the protruding portion 34 are not described herein, provided that the protruding portion 34 is adapted to the second hole section 22, for example, a tapered portion or a cylinder. In addition, the protruding portion 34 does not occupy the entire area of the end surface of the substrate 33 on which the protruding portion 34 is located, and in turn the second pressing surface 31 is formed on the end surface not covered by the protruding portion 34. The second pressing surface 31 abuts against the first pressing surface 24 of the electrolyte injection hole 2 to increase the contact area and implement surface-to-surface sealing.

With the protruding portion 34 provided at an end of the electrolyte injection nozzle 3, the protruding portion 34 can be preferentially inserted when the electrolyte injection nozzle 3 is inserted into the electrolyte injection hole 2, thereby directly guiding the fluid and effectively preventing electrolyte leakage when the electrolyte flows into the battery cell during the electrolyte injection. In addition, in the technical solution of these embodiments of this application, with the second pressing surface 31 formed on the end portion, excluding the protruding portion 34, of the substrate 33 on which the protruding portion 34 is located, when the electrolyte injection nozzle 3 fits with the battery cell top cover 1, the second pressing surface 31 can tightly abut against the first pressing surface 24 of the battery cell top cover 1 when the electrolyte injection nozzle 3 is pressed down by an external force. This implements surface sealing with a large contact area through surface-to-surface abutting, avoids sealing failure during the electrolyte injection, achieves an effective and reliable surface sealing effect, and prevents electrolyte leakage during the electrolyte injection, thereby solving the problem of electrolyte contamination. Moreover, surface-to-surface sealing effectively reduces frictional force, thereby effectively prolonging service life of the electrolyte injection nozzle 3 and reducing production and maintenance costs.

According to some embodiments of this application, optionally, referring to FIG. 4 to FIG. 7, the protruding portion 34 is a tapered portion, where an outer wall of the tapered portion is configured to be covered by a tapered inner wall of a second hole section 22, so that when the electrolyte injection nozzle 3 is inserted into the electrolyte injection hole 2, the tapered portion is inserted into the electrolyte injection hole 2 with the second hole section 22.

With the protruding portion 34 set as a tapered portion, when the protruding portion 34 is inserted into the electrolyte injection hole 2 of the battery cell top cover 1, the protruding portion 34 can be accurately inserted into the second hole section 22 of the electrolyte injection hole 2 and covered by the second hole section 22, and the small lower end of the tapered portion can accurately communicate the electrolyte injection channel 32 with the electrolyte injection hole 2, guiding the insertion of the electrolyte injection nozzle 3 and improving insertion accuracy.

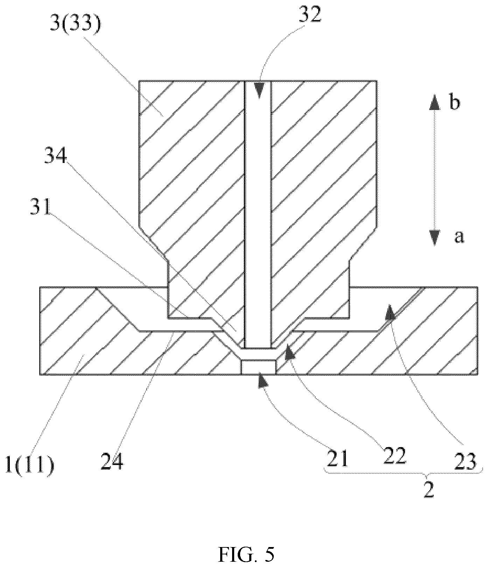

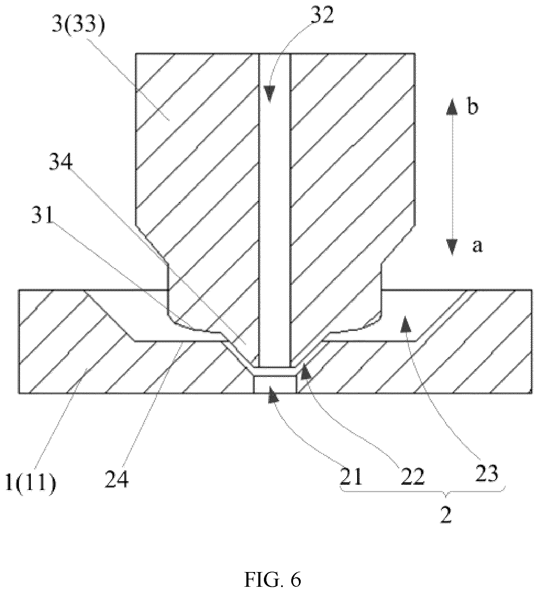

According to some embodiments of this application, optionally, referring to FIG. 5 and FIG. 6, the second pressing surface 31 is a horizontal surface; or the second pressing surface 31 is an arc surface protruding toward the protruding portion 34.

The second pressing surface 31 being set as a horizontal surface or an arc surface to fit with the first pressing surface 24 not only can implement surface-to-surface sealing, but also can enhance the diversity of contact surface design, thereby improving feasibility, versatility, and applicability. Specifically, when the second pressing surface 31 is a horizontal surface, the entire contact area between the first pressing surface 24 and the second pressing surface 31 is an effective area, which can easily implement surface-to-surface pressing sealing with the first pressing surface 24 while increasing the contact area, forming tight pressing in a direction perpendicular to the first pressing surface 24, and effectively solving the problem of sealing failure during the electrolyte injection, thereby preventing electrolyte leakage. When the second pressing surface 31 is a protruding arc surface, the arc surface can also be compressed to form a plane to fit with the first pressing surface 24 when the electrolyte injection nozzle 3 is pressed toward the electrolyte injection hole 2 by an external force, and the portion closer to the electrolyte injection channel 32 is subjected to a greater pressure, which can prevent electrolyte overflow. The pressure corresponding to the arc surface is distributed in a gradient, which gradually decreases from the electrolyte injection channel 32 outward, also preventing sealing failure. It should be noted that the arc surface may be a 1/8 circular arc surface.

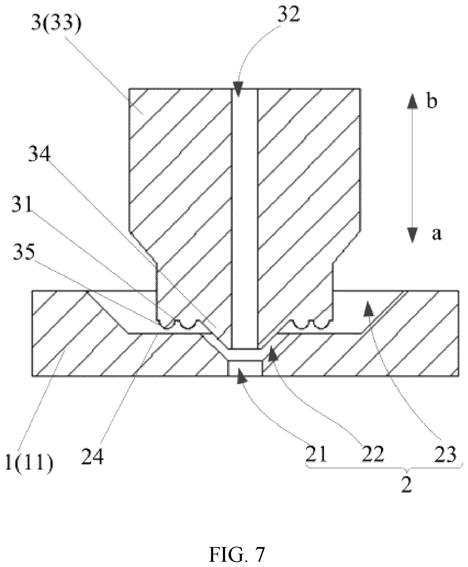

According to some embodiments of this application, optionally, referring to FIG. 7, the second pressing surface 31 includes a horizontal surface, and the horizontal surface is provided with continuous protrusions 35 protruding toward the protruding portion 34.

In these embodiments, the second pressing surface 31 not only can be set as a simple horizontal surface or arc surface, but also can be provided with protrusions 35 facing the protruding portion 34, namely, facing the electrolyte injection hole 2, on the horizontal surface. The protrusions 35 are continuously arranged around the axial direction of the substrate 33, so that when the electrolyte injection nozzle 3 is pressed toward the electrolyte injection hole 2 by an external force, the protrusions 35 can be sealed with the first pressing surface 24 under a great pressure to prevent electrolyte leakage. In addition, when pressed, the protrusions 35 are compressed to allow the horizontal surface on which the protrusions 35 are located to fit with the first pressing surface 24 as much as possible, thereby implementing surface-to-surface sealing. Certainly, the protrusions 35 may alternatively be concentric ring protrusions formed by a plurality of concentric circular rings spaced apart on the horizontal surface, to implement multi-sealing. In such arrangement, even if a small amount of electrolyte leaks, the space between adjacent protrusions 35 can accommodate the leaked electrolyte and prevent further overflow of the electrolyte, ensuring that the electrolyte does not overflow to the outer step of the third hole section 23, thereby ensuring final sealing of the sealing nail.

According to some embodiments of this application, optionally, referring to FIG. 4 to FIG. 7, an area of a projection of the second pressing surface 31 in a second direction b is a second area; where the second area is smaller than an area of the first pressing surface 24 when the second pressing surface 31 abuts against the first pressing surface 24; and the second direction b is the axial direction of the substrate 33.

With the area of the projection of the second pressing surface 31 in the second direction b set to be smaller than the area of the first pressing surface 24 when the first pressing surface 24 is in contact with the second pressing surface 31, the first pressing surface 24 extends a distance between a hole wall of the second hole section 22 and a hole wall of the third hole section 23 in a radial direction of the electrolyte injection hole 2. In other words, referring to FIG. 4 to FIG. 7, a size of the first pressing surface 24 in the left-right direction in the figures is greater than a size of the second pressing surface 31 in the left-right direction in the figures, or a width of the first pressing surface 24 is greater than a width of the second pressing surface 31, thereby extending an overflow path of the electrolyte from the first hole section 21 outward. Therefore, even if the electrolyte leaks, the electrolyte does not flow to the junction of the first pressing surface 24 and the third hole section 23, the third hole section 23, and the outer side, namely, the outer step, of the third hole section 23, thereby preventing the leaked electrolyte from flowing to the third hole section 23 of the electrolyte injection hole 2 to contaminate the periphery of the electrolyte injection hole 2, which otherwise affects subsequent welding with the sealing nail.

According to some embodiments of this application, optionally, the substrate 33 and the protruding portion 34 are an integrally formed elastic structure.

In these embodiments, the substrate 33 and the protruding portion 34 may be set as an integrally formed elastic structure, for example, a rubber material. Through integral forming, the strength and sealing degree between the substrate 33 and the protruding portion 34 are reliable, causing small influence when the substrate 33 of the electrolyte injection nozzle 3 fits with the electrolyte injection hole 2 of the battery cell top cover 1 for electrolyte injection, thereby avoiding unnecessary leakage points.

According to some embodiments, referring to FIG. 4 to FIG. 8, this application provides a battery cell top cover 1 and an electrolyte injection nozzle 3 fitting with the battery cell top cover 1. The battery cell top cover 2 includes a top cover body 11, where the top cover body 11 is provided with an electrolyte injection hole 2. The electrolyte injection hole 2 includes a first hole section 21, a second hole section 22, and a third hole section 23 that are sequentially arranged and communicate with each other in a thickness direction of the top cover body 11, the first hole section 21 being closer to the inside of a battery cell relative to the second hole section 22. A stepped surface, namely, a first pressing surface 24, is formed between an end of the second hole section 22 facing away from the first hole section 21 and the third hole section 23, and an inner wall of the second hole section 22 is a tapered inner wall. The electrolyte injection nozzle 3 includes a substrate 33, where an end of the substrate 33 is provided with a tapered protruding portion 34, and the substrate 33 is provided in an axial direction of the substrate 33 with an electrolyte injection channel 32 penetrating through the substrate 33 and the protruding portion 34. An end surface of the substrate 33 on which the protruding portion 34 is located forms a second pressing surface 31. When the tapered protruding portion 34 is inserted into the tapered second hole section 22, the electrolyte injection channel 32 communicates with the first hole section 21 of the electrolyte injection hole 2, the second hole section 22 covers an outer wall of the protruding portion 34, the second pressing surface 31 tightly abuts against the first pressing surface 24, and the electrolyte injection nozzle 3 can inject an electrolyte into the battery cell 20 through the battery cell top cover 1 with the electrolyte injection hole 2 and the first pressing surface 24.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the foregoing embodiments or make equivalent replacements to some or all technical features thereof without departing from the scope of the technical solutions in the embodiments of this application. All such modifications and equivalent replacements shall fall within the scope of the claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery cell top cover, **characterized by** comprising:
a top cover body, wherein the top cover body is provided with an electrolyte injection hole;
the electrolyte injection hole comprises a first hole section, a second hole section, and a third hole section that are sequentially arranged and communicate with each other in a thickness direction of the top cover body, the first hole section being closer to the inside of a battery cell relative to the second hole section; and
a stepped surface is formed between an end of the second hole section facing away from the first hole section and the third hole section, the stepped surface being a first pressing surface;
wherein the first pressing surface is configured to abut against a second pressing surface, and the electrolyte injection hole is configured to communicate with an electrolyte injection channel, so as to inject an electrolyte into the battery cell by inserting an electrolyte injection nozzle with the second pressing surface and the electrolyte injection channel into the electrolyte injection hole.

2. The battery cell top cover according to claim 1, **characterized in that**
an inner wall of the second hole section is a tapered inner wall, wherein the tapered inner wall is configured to cover an outer wall of a tapered portion, so as to inject the electrolyte into the battery cell via the electrolyte injection nozzle with the tapered portion.

3. The battery cell top cover according to claim 1 or 2, **characterized in that**
the first pressing surface is a horizontal surface;
or the first pressing surface is provided with a recessed region.

4. The battery cell top cover according to any one of claims 1 to 3, **characterized in that**
an area of a projection of the first pressing surface in a first direction is a first area;
wherein the first area is greater than a contact area of the first pressing surface and the second pressing surface when the first pressing surface abuts against the second pressing surface; and
the first direction is the thickness direction of the top cover body.

5. The battery cell top cover according to any one of claims 1 to 4, **characterized in that**
a diameter of the first hole section is a first diameter;
wherein the first diameter is greater than a diameter of the electrolyte injection channel.

6. The battery cell top cover according to any one of claims 1 to 5, **characterized in that**
an inner wall of the third hole section is a tapered inner wall; or
the inner wall of the third hole section is a cylindrical inner wall.

7. A battery cell, **characterized by** comprising:
the battery cell top cover according to any one of claims 1 to 6.

8. A battery, **characterized by** comprising:
the battery cell according to claim 7.

9. An electric device, **characterized by** comprising:
the battery according to claim 8.

10. The electric device according to claim 9, **characterized in that** the electric device is one of a mobile phone, a tablet, a notebook computer, an electric toy, an electric tool, an electric bicycle, a new energy vehicle, a ship, or a spacecraft.

11. An electrolyte injection nozzle, **characterized by** comprising:
a substrate, wherein an end of the substrate is provided with a protruding portion, and the substrate is provided in an axial direction of the substrate with an electrolyte injection channel penetrating through the substrate and the protruding portion; and
an end surface of the substrate on which the protruding portion is located forms a second pressing surface;
wherein the second pressing surface is configured to abut against a first pressing surface, and the electrolyte injection channel is configured to communicate with an electrolyte injection hole, so as to inject an electrolyte into a battery cell by inserting the electrolyte injection nozzle into a battery cell top cover with the electrolyte injection hole and the first pressing surface.

12. The electrolyte injection nozzle according to claim 11, **characterized in that**
the protruding portion is a tapered portion, wherein an outer wall of the tapered portion is configured to be covered by a tapered inner wall of a second hole section, so that when the electrolyte injection nozzle is inserted into the electrolyte injection hole, the tapered portion is inserted into the electrolyte injection hole with the second hole section;
or the protruding portion is cylindrical.

13. The electrolyte injection nozzle according to claim 11 or 12, **characterized in that**
the second pressing surface is a horizontal surface; or
the second pressing surface is an arc surface protruding toward the protruding portion.

14. The electrolyte injection nozzle according to claim 11 or 12, **characterized in that**
the second pressing surface comprises a horizontal surface, and the horizontal surface is provided with continuous protrusions protruding toward the protruding portion.

15. The electrolyte injection nozzle according to claim 14, **characterized in that** the horizontal surface is provided with concentric ring protrusions.

16. The electrolyte injection nozzle according to any one of claims 11 to 15, **characterized in that**
an area of a projection of the second pressing surface in a second direction is a second area; wherein
the second area is smaller than an area of the first pressing surface when the second pressing surface abuts against the first pressing surface; and
the second direction is the axial direction of the substrate.

17. The electrolyte injection nozzle according to any one of claims 11 to 16, **characterized in that**
the substrate and the protruding portion are an integrally formed elastic structure.
